# EUROPEAN PATENT SPECIFICATION

(11) **EP 2 689 906 B1**
(45) Date of publication and mention of the grant of the patent: **10.08.2016**
(21) Application number: 12761326.3
(22) Date of filing: 29.02.2012
(51) Int. Cl.: B28B 7/36, B28B 7/38, B29C 33/56, B29C 33/40

(54) **METHOD FOR MANUFACTURING MOLDING TOOL**
VERFAHREN ZUR HERSTELLUNG EINES FORMWERKZEUGS
PROCÉDÉ DE FABRICATION D'OUTIL DE MOULAGE

(30) Priority: 22.03.2011 JP 2011061908
(43) Date of publication of application: 29.01.2014
(73) Proprietor: NGK Insulators, Ltd., Nagoya-shi, Aichi 467-8530 (JP)
(72) Inventor: KANEKO Kimihisa, Nagoya-shi Aichi 467-8530 (JP); YOSHIOKA Kunihiko, Nagoya-shi Aichi 467-8530 (JP)
(74) Representative: Naylor, Matthew John
(86) International application number: PCT/JP2012/055029
(87) International publication number: WO 2012/128002

(56) References cited:
- FR-A- 1 279 428
- FR-A- 1 586 203
- GB-A- 1 029 363
- JP-A- 9 038 933
- JP-A- 62 099 116
- US-A1- 2009 280 208
- US-A1- 2012 085 887

## Description

The present invention relates to a method for producing a forming mold employed in yielding a molded product.

### [Description of the Related Art]

Typically, molded products such as urethane molded products are produced by means of a forming mold through the following sequential steps. Firstly, a precursor of a molded product (e.g., a slurry) is poured into a space for forming a material (hereinafter referred to as a forming space) defined by a surface provided for forming an object material (hereinafter referred to as a forming surface) of the forming mold. As used herein, the term "forming surface" refers to a surface which is a surface in direct contact with a molded product precursor (slurry, paste, etc.) cast into the molding space. Then, the slurry or the like is solidified (and dried), to thereby provide a molded product in the forming space. The forming mold is removed from the molded product (i.e., the molded product is released from the forming mold), to thereby separate the molded product.

During mold releasing, in some cases, a molded product adheres on the forming surface of the forming mold. In order to prevent adhesion of a molded product (i.e., to enhance mold-releasability), a fluororesin layer is provided on the forming surface of a forming mold. This technique is widely known in the art (see, for example, Japanese Patent Application Laid-Open (*kokai*) No. 2006-264225).

For example, Japanese Patent Application Laid-Open (*kokai*) No. 2006-264225 discloses that an Ni-containing under-plating layer is formed on the forming surface of a forming mold, and the under-plating layer is coated with a fluororesin layer (thickness: ≤50 µ). Japanese Patent Application Laid-Open (*kokai*) No. 2006-264225 also discloses that the hardness of the forming surface of the forming mold is ensured by means of the under-plating layer formed through the treatment, and the fluororesin layer provides excellent mold-releasability.

### [Summary of the Invention]

Meanwhile, in the forming mold disclosed in the above document, the surface of the formed fluororesin layer provides a "forming surface." Generally, the surface of a layer formed through a coating process has poor form accuracy (e.g., surface roughness, flatness, or degree of parallelization). Therefore, the forming surface of the forming mold disclosed in the above document has also poor form accuracy.

The present invention has been conceived in order to solve the problem. Thus, an object of the present invention is to provide a method for producing a forming mold which has a resin layer serving as a forming surface, the resin layer having high form accuracy.

Accordingly, the present invention provides a method for producing a forming mold as set out in claim 1. Optional features of the invention are set out in the dependent claims.

The forming mold produced through the production method of the present invention comprises a base member, and a resin layer which is formed on the base member and which serves as a forming surface. The base member has a rigidity higher than that of the resin layer. As used herein, the term "rigidity" refers to a product (EI) of Young's modulus of material E [N/m²] and cross-section secondary moment I along the depth direction [m⁴]. In one embodiment of the present invention, the resin layer is formed of a fluorine compound, and the base member is formed of a metal.

According to the method of the present invention for producing a forming mold, a resin layer having a thickness of 1 mm or more is formed on (a surface of) the base member. The resin layer is formed so as to cover the surface of the base member. The resin layer may be formed through, for example, lining, coating, painting (applying), sticking a resin sheet thereon, or a like technique. Particularly, for ensuring a sufficient thickness of the resin layer, lining or sticking a resin sheet thereon is preferably employed.

Then, the surface of the thus-formed resin layer is machined, to thereby form (complete) the aforementioned forming surface. Examples of the machining technique include end-milling and planar grinding. Thereafter, various finishing processes may be additionally performed. In the meantime, the entire surface of the resin layer may serve as a forming surface, or only a part of the resin layer may serve as a forming surface. In any case, the surface of the resin layer serving as a forming surface is formed (completed) through machining.

Through the aforementioned procedure, the forming surface of the forming mold, formed of the resin layer, is completed through machining. Thus, differing from the forming mold disclosed in the above document (i.e., a forming mold in which the surface of the fluororesin layer formed through a coating process serves as a "forming surface"), the thus-obtained forming surface has a form accuracy as high as that attained by a forming surface of a forming mold produced through working without employing a resin layer. In other words, the invention provides a forming mold having a resin layer which serves as a forming surface and which has high surface form accuracy. As a result, even in the case where the shape of the forming surface is difficult to form by the forming mold disclosed in the aforementioned document (e.g., a forming surface is an inner wall of a sufficiently elongated (with a sufficiently high aspect ratio) through-hole), the form accuracy of the entire forming surface can be enhanced.

In addition, according to the forming mold of the invention, the resin layer is formed on the base member having a rigidity higher than that of the resin layer. Therefore, as compared with a forming mold formed of only a resin layer, deformation of the resin layer is prevented, whereby the form accuracy of the forming surface made of the resin layer can be further enhanced. Furthermore, the surface of the resin layer, which surface has a sufficient thickness of "1 mm or more," is machined, to thereby form a forming surface. Thus, relatively large machining allowance (i.e., the thickness of a portion to be removed through machining) can be ensured. As a result, there can be realized not only a flat forming surface, but also a forming surface formed of an inner wall of a sufficiently elongated (with a sufficiently high aspect ratio) through-hole, or a forming surface of a complex shape (with corners) which surface is difficult to realize by the forming mold disclosed in the aforementioned document.

More specifically, the forming surface formed through the aforementioned machining procedure preferably has a 10-point average roughness (Rz JIS) of 10 µm or less. In addition, the forming surface formed through the aforementioned machining procedure preferably exhibits a contact angle of 60° or more with respect to water. Under these conditions, excellent mold-releasability can be attained.

### [Brief Description of the Drawings]

[FIG. 1] A perspective view of a forming mold produced through a forming mold production method according to one embodiment of the present invention.
[FIG. 2] A cross-section of the forming mold shown in FIG. 1, cut along the line 2-2.
[FIG. 3] A first step of the production of the forming mold shown in FIG. 1 (corresponding FIG. 2).
[FIG. 4] A second step of the production of the forming mold shown in FIG. 1 (corresponding FIG. 2).
[FIG. 5] A third step of the production of the forming mold shown in FIG. 1 (corresponding FIG. 2).
[FIG. 6] A fourth step of the production of the forming mold shown in FIG. 1 (corresponding FIG. 2).

### [Modes for Carrying Out the Invention]

The forming mold produced through the production method of the present invention may be employed as a forming mold for yielding a molded product through a process which includes preparing a slurry from slurry raw materials including a ceramic material powder, a dispersion medium, a gelling agent, and a dispersant; and casting the slurry into the mold. In the forming mold of the present invention, at least a portion of the mold has the characteristic features of the present invention, and preferably the entirety of the forming mold has the characteristic features of the present invention. In the case where the forming mold is composed of a plurality of members such as an upper half and a lower half, at least one member has the characteristic features of the present invention.

### (Configuration)

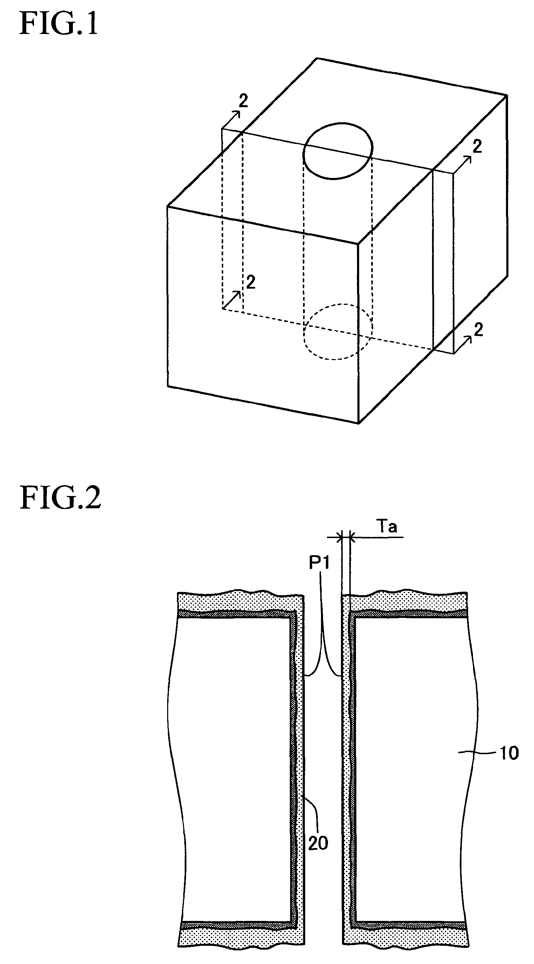

FIGs. 1 and 2 show an embodiment of the forming mold produced through a forming mold production method according to one embodiment of the present invention. As shown in FIG. 2 (a cross-section of the forming mold shown in FIG. 1, cut along the line 2-2), the forming mold has a base member 10 and a resin layer 20 formed on (covering) the entire surface of the base member 10. In this embodiment, the surface of a portion of the resin layer 20 which portion has been formed on the inner wall of the cylindrical through-hole provided in the base member 10 (i.e., a portion of the resin layer 20 covering the entirety of the base member 10) P1 (i.e., cylinder inner wall surface) serves as a "forming surface." As used herein, the term "forming surface" refers to a surface which defines the space for providing a molding space for producing a molded product and is a surface in direct contact with a molded product precursor (slurry, paste, etc.) cast into the molding space. In other words, a cylindrical molded produced is yielded by use of the forming mold.

The base member 10 is formed of a metallic material such as aluminum alloy, stainless steel, titanium, or iron-based material. The base member 10 has a rigidity higher than that of the resin layer 20. In other words, the base member 10 can serve as a support base for preventing deformation of the resin layer 20.

The resin layer 20 is formed of a material which provides high mold-releasability, such as fluororesin (fluorine-containing compound), silicone resin (silicone compound), or PVA. Examples of the fluorine-containing compound include PTFE, PFA, ETFE, FEP, PVDF, and PCTFE.

The portion of the resin layer 20 covering the forming surface P1 (i.e., forming a hollow cylinder) has a thickness Ta (see FIG. 2) of 0.1 to 1 mm. As described hereinbelow, the forming surface P1 is completed through machining. The forming surface P1 (i.e., an inner wall surface of the cylinder) has a 10-point average roughness (Rz JIS) of 20 µm or less (preferably 10 µm or less). The forming surface P1 preferably has a contact angle with respect to water of 60° or more (more preferably 85° or more). By virtue of such properties, excellent mold-releasability can be attained. The forming surface P1 is preferably formed from a material containing no additive or primer. However, the inside of the resin layer 20 (a portion not forming the forming surface) may contain an additive or a primer.

### (Production method)

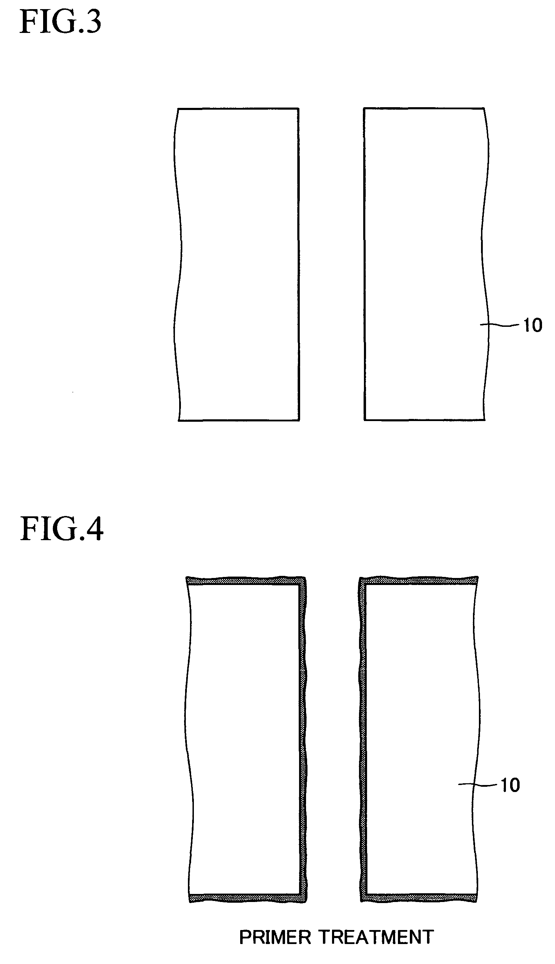

With reference to FIGs. 3 to 6 (corresponding to FIG. 2), the method for producing a forming mold according to the present invention will be described. As shown in FIG. 3, a base member 10 is produced through a known technique. Then, as shown in FIG. 4, the entire surface of the base member 10 (including the inner wall of the cylindrical through-hole) is treated with a primer through a known technique.

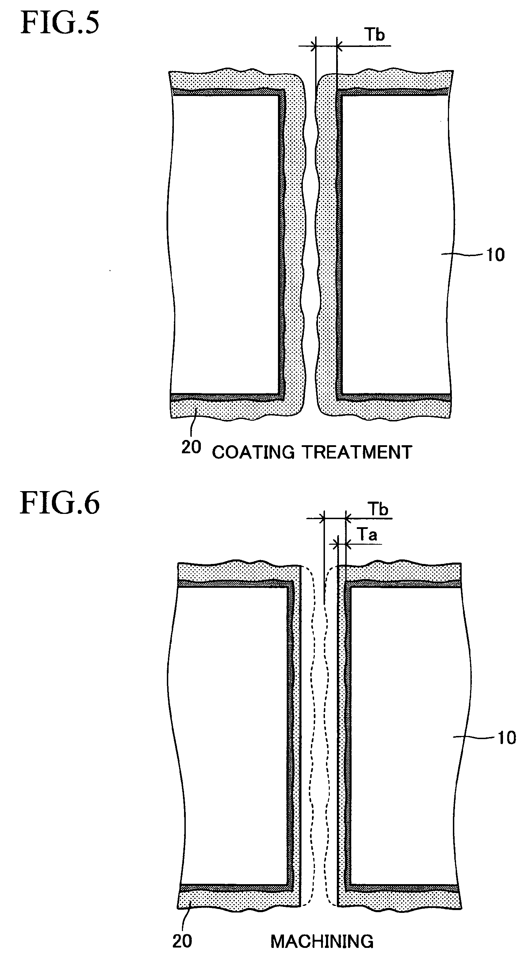

As a result, as shown in FIG. 5, the resin layer 20 is formed on the entire surface of the base member 10 (including the inner wall of the cylindrical through-hole) which has undergone the primer treatment. The resin layer 20 may be formed through, for example, lining, coating, painting (applying), sticking a resin sheet thereon, or a like technique. The thus-formed resin layer 20 has a thickness Tb (see FIG. 5) of 1 to 3 mm.

Subsequently, as shown in FIG. 6, the surface of the portion of the resin layer 20 covering the inner wall of the cylindrical through-hole provided in the base member 10 is machined for finishing so that the thickness of the portion is reduced from Tb to Ta. The machining may be performed through end-milling or a similar technique. Through machining, the forming surface P1 (i.e., cylinder inner wall surface) of the forming mold is completed. Since the machining is performed on the basis of the base member 10 having high rigidity, accuracy of working is enhanced as compared with the case where a forming mold is formed only of a resin layer. Thus, the form accuracy of the forming surface P1 is enhanced.

### (Action and effects)

According to the method for producing a forming mold of the embodiment of the present invention, the forming surface P1 (i.e., cylinder inner wall surface) of the forming mold is formed from the resin layer 20 through machining. Therefore, the forming surface P1 has a form accuracy as high as that attained by a forming surface of a forming mold produced through machining without employing a resin layer. That is, the forming mold in which the forming surface P1 of the resin layer 20 has high form accuracy can be produced.

In addition, in the forming mold, the resin layer 20 is formed on the surface of the base member 10 having a rigidity higher than that of the resin layer 20. Therefore, as compared with a forming mold formed of only a resin layer, deformation of the resin layer is prevented, whereby the form accuracy of the forming surface made of the resin layer 20 can be further enhanced. Furthermore, the surface of the resin layer 20 which surface has a sufficient thickness Tb of 1 to 3 mm (i.e., 1 mm or more) is machined, to thereby form the forming surface P1. Thus, relatively large machining allowance (i.e., the thickness of a portion to be removed through machining, specifically Tb - Ta) can be ensured. As a result, even when the forming surface is the surface of the inner wall of a sufficiently elongated (with a sufficiently high aspect ratio) through-hole, the form accuracy of the entire forming surface P1 can be enhanced.

Notably, no particular limitation is imposed on the present invention. Other than the aforementioned embodiment, various modifications may be employed, within the scope of the present invention. For example, in the above embodiment, the "forming surface" is the surface of the inner wall of the cylinder. However, no particular limitation is imposed on the shape of the "forming surface," so long as the forming surface is the surface of the resin layer formed on the surface of the base member, and the forming surface is finished through machining.

In the above embodiment, only a portion of the surface of the resin layer formed on the base member (i.e., inner wall surface of the cylinder) is provided to serve as a forming surface. However, alternatively, the entire surface of the resin layer formed on the base member may serve as a forming surface. In any case, the entire surface of the resin layer which surface serves as a forming surface is finished (completed) through machining.

## Claims

1. A method for producing a forming mold comprising a base member (10), and a resin layer (20) formed on the base member (10), wherein the resin layer (20) has a surface serving as a forming surface (P1), and the base member (10) has a rigidity higher than that of the resin layer (20),
**characterized in that**
the method comprises:
a forming step of forming on the base member (10) a resin layer (20) having a thickness of 1 mm or more, and
a machining step of machining the surface of the formed resin layer (20), to thereby form the forming surface (P1).

2. A method according to claim 1, **characterized in that** the forming surface (P1) formed through machining has a 10-point average roughness (Rz JIS) of 20 µm or less.

3. A method according to claim 1 or 2, **characterized in that** the forming surface (P1) formed through machining has a contact angle with respect to water of 60° or more.

4. A method according to any one of claims 1 to 3, **characterized in that** the resin layer (20) is formed from a fluorine compound as a material.

5. A method according to any one of claims 1 to 4, **characterized in that** the base member (10) is formed from a metal as a material.

## Patentansprüche

1. Verfahren zur Herstellung eines Formwerkzeugs, umfassend ein Basiselement (10) und eine auf dem Basiselement (10) ausgebildete Harzschicht (20), worin die Harzschicht (20) eine Oberfläche aufweist, die als eine Formoberfläche (P1) dient, und das Basiselement (10) eine Steifigkeit aufweist, die höher als diejenige der Harzschicht (20) ist,
**dadurch gekennzeichnet, dass**
das Verfahren Folgendes umfasst:
einen Formschritt des Formens einer Harzschicht (20), die eine Dicke von 1 mm oder mehr aufweist, auf dem Basiselement (10), und
einen Bearbeitungsschritt zur maschinellen Bearbeitung der Oberfläche der ausgebildeten Harzschicht (20), um dadurch die Formoberfläche (P1) auszubilden.

2. Verfahren nach Anspruch 1, **dadurch gekennzeichnet, dass** die durch maschinelle Bearbeitung ausgebildete Formoberfläche (P1) eine mittlere 10-Punkte-Rauheit (Rz JIS) von 20 µm oder weniger aufweist.

3. Verfahren gemäß Anspruch 1 oder 2, **dadurch gekennzeichnet, dass** die durch maschinelle Bearbeitung ausgebildete Formoberfläche (P1) einen Kontaktwinkel mit Bezug auf Wasser von 60° oder mehr aufweist.

4. Verfahren gemäß einem von Ansprüchen 1 bis 3, **dadurch gekennzeichnet, dass** die Harzschicht (20) aus einer Fluor-Verbindung als ein Material gebildet ist.

5. Verfahren gemäß einem der Ansprüche 1 bis 4, **dadurch gekennzeichnet, dass** das Basiselement (10) aus einem Metall als ein Material gebildet ist.

## Revendications

1. Procédé de fabrication d'un moule de mise en forme qui comprend un élément de base (10), et une couche de résine (20) formée sur l'élément de base (10), dans lequel la couche de résine (20) possède une surface qui sert de surface de mise en forme (P1), et l'élément de base (10) possède une rigidité supérieure à celle de la couche de résine (20),
**caractérisé en ce que**
le procédé comprend :
une étape de formation qui consiste à former, sur l'élément de base (10), une couche de résine (20) qui possède une épaisseur de 1 mm ou plus, et
une étape d'usinage qui consiste à usiner la surface de la couche de résine formée (20), afin de former la surface de mise en forme (P1).

2. Procédé selon la revendication 1, **caractérisé en ce que** la surface de mise en forme (P1) formée par le biais de l'usinage possède une rugosité moyenne de 10 points (Rz JIS) égale à 20 µm ou moins.

3. Procédé selon la revendication 1 ou 2, **caractérisé en ce que** la surface de mise en forme (P1) formée par le biais de l'usinage présente un angle de contact par rapport à l'eau de 60° ou plus.

4. Procédé selon l'une quelconque des revendications 1 à 3, **caractérisé en ce que** la couche de résine (20) est formée d'un composé de fluor en guise de matériau.

5. Procédé selon l'une quelconque des revendications 1 à 4, **caractérisé en ce que** l'élément de base (10) est formé de métal en guise de matériau.
